Europäisches Patentamt

European Patent Office

Office européen des brevets

(11) Veröffentlichungsnummer: **0 271 738 B1**

# EUROPÄISCHE PATENTSCHRIFT

(45) Veröffentlichungstag der Patentschrift: **20.01.93**

(21) Anmeldenummer: **87117133.6**

(22) Anmeldetag: **20.11.87**

(51) Int. Cl.⁵: **C08F 210/02**, //C08F2/00, C10L1/18,(C08F210/02,220:06, 218:04)

(54) Verfahren zur Herstellung von Ethylen-Mischpolymerisaten und deren Verwendung als Zusatz zu Mineralöl und Mineralölfraktionen.

(30) Priorität: **27.11.86 DE 3640613**

(43) Veröffentlichungstag der Anmeldung:
**22.06.88 Patentblatt 88/25**

(45) Bekanntmachung des Hinweises auf die Patenterteilung:
**20.01.93 Patentblatt 93/03**

(84) Benannte Vertragsstaaten:
**AT BE CH DE ES FR GB IT LI LU NL SE**

(56) Entgegenhaltungen:
**EP-A- 0 098 488**
**DE-A- 1 812 094**
**DE-A- 2 037 673**
**DE-A- 2 102 469**
**FR-A- 2 018 538**

(73) Patentinhaber: **HOECHST AKTIENGESELL-SCHAFT**
**Postfach 80 03 20**
**W-6230 Frankturt am Main 80(DE)**

(72) Erfinder: **Bühnen, Heinz Dieter, Dipl.-Ing.**
**Kapellenstrasse 56**
**W-4200 Oberhausen 12(DE)**
Erfinder: **Payer, Wolfgang, Dr. Dipl.-Chem.**
**Zedernweg 58**
**W-4230 Wesel 1(DE)**
Erfinder: **Zoller, Wilhelm, Dr. Dipl.-Chem.**
**Im Torfveen 26m**
**W-4200 Oberhausen 11(DE)**

EP 0 271 738 B1

**Beschreibung**

Die vorliegende Erfindung betrifft die Herstellung von Mischpolymerisaten des Ethylens mit Estern des Vinylalkohols oder Estern der Acryl- oder Methacrylsäure als Comonomeren. Die Mischpolymerisate haben eine Viskosität von 0,1 Pa.s (gemessen bei 140°C) bis 20 Pa.s (gemessen bei 180°C), ihr Comonomerenanteil beträgt 25 bis 55 Gew.-Teile je 100 Gew.-Teile Ethylen. Die Polymerisation erfolgt unter Drücken von 120 bis 300 MPa und bei Temperaturen von 150 bis 300°C in einem Rohrreaktor. Die Monomeren werden zusammen mit Regler und Initiator als Gemische unterschiedlicher quantitativer Zusammensetzung in zwei Teilströmen dem Reaktor zugeführt, wobei der eine Teilstrom dem Reaktoreinlaß, der andere Teilstrom einer oder mehreren Einspeisungsstellen längs des Reaktors zugeleitet werden. Die auf diesem Wege erhaltenen Mischpolymerisate sind ausgezeichnete Fließpunktverbesserer.

Aus der DE 21 02 469 C2 ist es bekannt, Ethylencopolymerisate mit einem Molekulargewicht von 500 bis 4500 und einem Comonomerengehalt von 30 bis 75 Gew.-% als Zusatz zu Erdöl und Erdölfraktionen zu verwenden. Die Polymerisate werden aus Ethylen und Vinylestern mit 4 bis 10 Kohlenstoffatomen, sowie Acrylsäure- und Methacrylsäureester, die sich von Alkoholen mit 1 bis 12 Kohlenstoffatomen ableiten, unter Ausschluß von Lösungs- und Emulgiermitteln bei Drücken über 1000 atm und Temperaturen zwischen 150 und 350°C in Gegenwart Radikale bildender Katalysatoren und geeigneter Polymerisationsregler erhalten. Besonders bewährt hat sich in diesem Fall die kontinuierliche Durchführung der Copolymerisation in Rohrreaktoren. Dabei führt man dem Reaktor eine Mischung aus Ethylen, einem oder mehreren Comonomeren und dem Polymerisationsregler an einer oder mehreren Stellen des Reaktors zu. Die Zusammensetzung des Comonomerengemisches ist, unabhängig vom Einspeisungsort, stets dieselbe.

In der Praxis hat sich gezeigt, daß die Wirksamkeit der Fließpunktverbesserer abhängig ist von der Zusammensetzung der Mineralöle und Minerlöldestillate, deren Fließfähigkeit verbessert werden soll. Aus einem einzigen Copolymerisat bestehende Fließpunktverbesserer mit durch ihre Herstellung bedingter, gleichförmiger Zusammensetzung sind meist nur in Substraten bestimmter Herkunft und/oder Zusammensetzung effektiv. In anderen Fällen zeigen sie jedoch die erwünschte Wirkung nicht in ausreichendem Maße. Man kann sich dann dadurch behelfen, daß man die Copolymerisate in großen Mengen zusetzt oder daß man das Mineralöl oder Mineralöldestillat mit niedrigsiedenden Kohlenwasserstoffen vermischt.

Umfangreichere Einsatzmöglichkeiten als homogene Polymerisate besitzen Gemische aus zwei Polymerisaten unterschiedlicher Molmasse und/oder unterschiedlicher stofflicher Zusammensetzung.

Nach der DE 20 37 673 C2 besteht ein solches Gemisch z.B. aus einem Ethylen-Vinylacetat-Mischpolymerisat mit einem Molekulargewicht von 700 bis 3000 und einem Ethylen-Vinylacetat-Mischpolymerisat mit einem Molekulargewicht von über 3000 bis 60000, wobei jedes der Mischpolymerisate 99 bis 40 Gew.-% Ethyleneinheiten enthält und das Gewichtsverhältnis der beiden Mischpolymerisate im Bereich von 20 : 1 bis 1 : 20 liegt.

Die Verwendung von Polymerisatgemischen setzt aber voraus, daß verschiedene Polymerisate in getrennten Arbeitsgängen hergestellt werden. Sie bedingt einen hohen apparativen Aufwand, eine umfangreiche Lagerhaltung und birgt die Gefahr in sich, daß Entmischungen auftreten.

Es bestand daher nicht nur die Aufgabe, Additive zu finden, die gegenüber den bekannten Fließpunktverbesserern eine noch größere Anwendungsbreite haben. Gefordert wird auch, daß sie in technisch einfacher Weise, wirtschaftlich und in stets reproduzierbarer Qualität herstellbar sind.

Diese Aufgabe wird gelöst durch ein Verfahren zur Herstellung von Copolymerisaten aus Ethylen und einem Ester des Vinylalkohols oder der Arylsäure oder der Methacrylsäure als Comonomerem, die je 100 Gewichtsteile Ethylen 25 bis 55 Gewichtsteile des Comonomeren enthalten und eine Viskosität im Bereich von 0,1 Pa.s (gemessen bei 140°C) bis 20 Pa.s (gemessen bei 180°C) aufweisen durch Polymerisation der Monomeren in einem mit mindestens einem Seitenast ausgerüsteten Rohrreaktor bei 120 bis 300 MPa und 150 bis 300°C in Gegenwart von Radikale bildenden Initiatoren und Polymerisationsreglern. Es ist dadurch gekennzeichnet, daß das dem Reaktoreingang einerseits (Primärstrom) und das dem Seitenast bzw. den Seitenästen andererseits (Sekundärstrom) zugeführte Gemisch aus den Monomeren, dem Regler und dem Initiator quantitativ unterschiedlich zusammengesetzt ist.

Polymerisationsverfahren, bei denen Monomerenströme unterschiedlicher Zusammensetzung dem Eingang und weiteren Stellen des Reaktors zugeführt werden, sind bekannt. Nach EP-A-0 098 488 gewinnt man auf diesem Wege Ethylen/Acrylsäureester-Copolymerisate mit einem Comonomerenanteil von 0,1 bis 1,5 Gew.-Teilen je 100 Gew.-Teilen Ethylen, die zur Herstellung dünner Folien dienen. In der DE-A-1 812 094 ist ein entsprechendes Verfahren beschrieben, das zu Copolymerisaten führt, die auf 100 Gew.-Teile Ethylen 11 bis 25 Gew.-Teile eines Vinylesters enthalten. Sie werden zur Herstellung von Formteilen verwendet. Nach dem Verfahren der FR-A-2 018 538 polymerisiert man Ethylen in drei Reaktionszonen bei unterschiedlichen Temperaturen und/oder in Gegenwart unterschiedlicher Reglermengen. Das erhaltene Homopolymerisat wird zu Folien verarbeitet.

Überraschenderweise führt das erfindungsgemäße Verfahren zu Polymerisaten, die die Fließfähigkeit von Mineralölen und Mineralöldestillaten erheblich verbessern. Sie unterdrücken nachhaltig die Ausscheidung von Agglomeraten aus Paraffinkristallen, wirken damit einem Ansteigen der Viskosität der Kohlenwasserstoffgemische bei sinkenden Temperaturen entgegen, setzen den Stockpunkt herab und verbessern ihre Filtrierbarkeit. Die nach der neuen Arbeitsweise gewonnenen Polymerisate haben sich zur Verbesserung der Fließfähigkeit von Mineralölen und aus ihnen gewonnenen Destillationsprodukten unabhängig von deren qualitativer und quantitativer Zusammensetzung bewährt.

Die Herstellung der neuen Polymerisate erfolgt durch Copolymerisation von Ethylen mit einem Ester des Vinylalkohols oder der Acrylsäure bzw. der Methacrylsäure in einem Rohrreaktor. Lösungs- und Emulgiermittel können abwesend sein, ausgenommen der geringe Anteil inerter Flüssigkeit, der zum Lösen des Polymerisationsinitiators dient. Als Comonomere des Ethylens werden Ester des Vinylalkohols oder Ester der Acrylsäure bzw. der Methacrylsäure eingesetzt. Die Ester des Vinylalkohols enthalten 4 bis 12 Kohlenstoffatome und sind Derivate von gesättigten aliphatischen Monocarbonsäuren, die geradkettig oder verzweigt sein können. Bewährt haben sich Ester mit 4 bis 8 Kohlenstoffatomen. Besonders geeignet sind Vinylacetat und Vinylpropionat.

Unter Acrylsäure- bzw. Methacrylsäureestern werden Verbindungen verstanden, die sich von geradkettigen oder verzweigten gesättigten aliphatischen Alkoholen mit 2 bis 20 Kohlenstoffatomen ableiten. Bevorzugt weist der Alkoholrest 2 bis 8 Kohlenstoffatome auf. Mit besonderem Erfolg werden n-Butylacrylat, tert.-Butylacrylat, n-Butylmethacrylat und tert.-Butylmethacrylat eingesetzt. Die Polymerisation erfolgt bei Drükken von 120 bis 300 MPa und Temperaturen von 150 bis 300°C. Als Polymerisationsinitiatoren werden vorteilhaft Peroxide in Form einer 5 bis 30 Gew.-%igen Lösung eingesetzt. Geeignete Lösungsmittel sind insbesondere aliphatische Kohlenwasserstoffe und Kohlenwasserstoffgemische.

Nach dem erfindungsgemäßen Verfahren werden dem Reaktor zwei unterschiedlich zusammengesetzte Monomerenströme zugeführt. Der eine Monomerenstrom (Primärstrom) wird über den Reaktoreingang in den Reaktor geleitet. Ein zweiter Monomerenstrom (Sekundärstrom) gelangt über mindestens einen Seitenast in den Reaktor. Unter dem Begriff Seitenast wird jede Einspeisestelle längs des Reaktors verstanden, über die Monomere und/oder Polymerisationshilfsmittel, nämlich Initiatoren und Regler, dem Reaktor zugeführt werden können. Die Zusammensetzung der Monomerenströme stimmt qualitativ überein, unterscheidet sich jedoch quantitativ.

Im Primärstrom beträgt der Comonomerenanteil 10 bis 35 Gew.-Teile, vorzugsweise 15 bis 25 Gew.-Teile je 100 Gew.-Teile Ethylen.

Im Sekundärstrom sind je 100 Gew.-Teile Ethylen 40 bis 150 Gew.-Teile, vorzugsweise 50 bis 110 Gew.-Teile des Comonomeren enthalten.

Die Initiatorgehalte im Primärstrom betragen vorzugsweise 50 bis 200 Gew.-ppm und im Sekundärstrom 100 bis 800 Gew.-ppm, jeweils bezogen auf das Monomerengemisch.

Zur Einstellung der Molmasse werden dem Primär- und dem Sekundärstrom Polymerisationsregler zugesetzt. Je nach Art des Reglers und der gewünschten Viskosität, die ein Maß für die Molmasse ist, ist die Reglerkonzentration in den beiden Strömen gleich oder verschieden und beträgt vorzugsweise 0,1 bis 4 Gew.-%, bezogen auf das Monomerengemisch.

Reaktoreingang und Seitenast bzw. Seitenästen werden im Relgelfall etwa gleiche Volumina des Monomerengemisches zugeführt, d.h. das Volumenverhältnis von Primär- und Sekundärstrom ist etwa 1 : 1. Es ist aber durchaus möglich, mit anderen Volumenverhältnissen zu arbeiten. Bewährt hat es sich, zwischen Primär- und Sekundärstrom einen Bereich von 1 : 0,6 bis 1,5 (in Vol.-Teilen) einzuhalten.

Der Sekundärstrom kann über einen einzigen Seitenast oder in Teilströmen über mehrere Seitenäste in den Reaktor eingeleitet werden. Die Anzahl der Teilströme hängt vom Temperaturverlauf im Reaktor ab. Im allgemeinen wird man den Sekundärstrom in nicht mehr als 3 Teilströme aufteilen, zweckmäßig arbeitet man mit 1 bis 3 und insbesondere mit 3 Teilströmen.

Die Menge des über die einzelnen Seitenäste dem Reaktor zugeführten Sekundärstrom-Anteils richtet sich nach dem Temperaturbereich, Maximum- und Minimumtemperatur, der im Reaktor eingehalten werden soll.

Die nach dem erfindungsgemäßen Verfahren hergestellten Ethylen-Copolymerisate enthalten je 100 Gew.-Teile Ethylen 25 bis 55 Gew.-Teile Comonomeres. Um diese Zusammensetzung im Polymerisat zu erreichen, ist es erforderlich, unter den gewählten Reaktionsbedingungen Monomerengemische einzusetzen, die insgesamt (also als Summe der Anteile im Primär- und im Sekundärstrom) etwa 10 bis 25 % mehr Comonomeres enthalten, als im Polymerisat einpolymerisiert sein soll.

Die nach der neuen Arbeitsweise erhaltenen Ethylen-Copolymerisate haben eine Viskosität von 0,1 Pa.s (gemessen bei 140°C) bis 20 Pa.s (gemessen bei 180°C) insbesondere von 0,2 Pa.s (gemessen bei 140°C) bis 20 Pa.s (gemessen bei 180°C) und vorzugsweise von 0,2 bis 0,5 PA.s (gemessen bei 140°C). Ihre Bestimmung erfolgt nach der deutschen Norm DIN 53 019 in einem Rotationsviskosimeter (Hersteller: Firma Haake). Die Viskosität wird in bekannter Weise durch den Zusatz von Polymerisationsreglern zum Monomerengemisch eingestellt. Wie bereits gesagt wurde, kann die Konzentration des Polymerisationsreglers in den beiden Monomerenströmen gleich oder unterschiedlich hoch sein. Der Primärstrom enthält bevorzugt 0,1 bis 3 Gew.-%, der Sekundärstrom 0,1 bis 3,9 Gew.-% Polymerisationsregler. Als Polymerisationsregler werden entsprechend dem Stand der Technik insbesondere Verbindungen aus vorzugsweise Propan oder Propionaldehyd eingesetzt.

Gemäß der Erfindung führt man die Polymerisation in an sich bekannten rohrförmigen Reaktoren durch, die ein Verhältnis von Länge zu Durchmesser im Bereich von etwa 10.000 : 1 bis 100.000 : 1 aufweisen. Bevorzugt liegt die untere Grenze für dieses Verhältnis bei etwa 20.000 : 1, insbesondere bei etwa 25.000 : 1. Die obere Grenze liegt zweckmäßig bei etwa 80.000 : 1, bevorzugt bei etwa 60.000 : 1. Rohrreaktoren haben üblicherweise eine Länge von etwa 400 bis 4.000 m, wobei die untere Grenze zweckmäßig bei etwa 600 m, die obere Grenze bei etwa 3.000 m, vorzugsweise 2.000 m liegt.

Die Polymerisation wird bei Temperaturen von 150 bis 300°C, vorzugsweise 220 bis 290°C und Drücken von 120 bis 300 MPa, vorzugsweise 150 bis 250 MPa durchgeführt. Die Regelung der Temperatur erfolgt nach dem Stand der Technik durch Kühlung des Rohrreaktors und durch den Sekundärstrom, der über mindestens einen Seitenast in den Reaktor eingeführt wird. Die Temperatur des Sekundärstroms beträgt 0 bis 60°C. Die Einspeisestellen für den Sekundärstrom in dem Rohrreaktor werden so gewählt, daß 2 bis 4 Reaktionszonen entstehen, in denen das Reaktionsgemisch etwa gleiche Verweilzeit hat.

Die erfindungsgemäßen Polymerisate verbessern die Fließfähigkeit und Filtrierbarkeit sowohl von Mineralölen als auch von Mineralöldestillaten. Unter dem Begriff Mineralöle werden insbesondere Rohöle und Destillationsrückstände wie schweres Heizöl verstanden. Als Mineralöldestillate werden Kohlenwasserstoffraktionen mit einer Siedetemperatur zwischen etwa 150 und 450°C bezeichnet. Hierzu gehören beispielsweise Petroleum, leichte Heizöle und Dieselkraftstoff. Von besonderer Bedeutung sind die Mitteldestillate wie Heizöl EL und Dieselkraftstoff.

Die erfindungsgemäßen Polymerisate werden Mineralölen bzw. Mineralöldestillaten in Form von Lösungen, die 10 bis 70 Gew.-% (bezogen auf die Lösung) der Polymerisate enthalten, zugesetzt. Als Lösungsmittel geeignet sind aliphatische oder aromatische Kohlenwasserstoffe oder Kohlenwasserstoffgemische, z.B. Benzinfraktionen. Besonders geeignet ist Kerosin. Die Polymerisatmenge, bezogen auf Mineralöl bzw. Mineralölfraktionen soll 0,001 bis 2, vorzugsweise 0,005 bis 0,5 Gew.-% betragen.

Die Polymerisate können allein oder auch zusammen mit anderen Additiven verwendet werden, z.B. mit anderen Stockpunkterniedrigern oder Entwachsungshilfsmitteln, mit Korrosionsinhibitoren, Antioxidantien, Schlamminhibitoren und Zusätzen zur Erniedrigung des Cloud-Points.

Die Wirksamkeit der erfindungsgemäßen Polymerisate als Fließpunktverbesserer wird durch die nachfolgenden Beispiele näher erläutert.

Die Beispiele 1 bis 3 betreffen das erfindungsgemäße Verfahren. In Beispiel 4 wird die Herstellung eines Ethylen-Vinylacetat-Copolymerisats nach dem Stand der Technik beschrieben.

Die Wirksamkeit der untersuchten Copolymerisate zur Verbesserung der Fließfähigkeit wird anhand des "Kalt-Filter-Verstopfungspunkt-Tests" (CFPP-Test) beschrieben. Die Durchführung des Tests erfolgt nach DIN 51 428. Sie ist auch im J. Inst. Petro. Bd. 52, Juni 1966, Seite 173 bis 185, publiziert. Zur Prüfung werden verschiedene Mineralöldestillate, Testöle 1 bis 3, eingesetzt.

Beispiel 1
_____

Die Polymerisation erfolgt in einem Röhrenreaktor mit 3 Seitenästen bei 260°C und 150 MPa unter Verwendung von Peroxiden, die in einem Kohlenwasserstoffgemisch gelöst sind als Initiator. Der dem Reaktoreinang zugeführte Primärgasstrom setzt sich aus 3182 Gew.-Teilen Ethylen, 660 Gew.-Teilen Vinylacetat und 8 Gew.-Teilen Propionaldehyd zusammen. Der Sekundärgasstrom, er wird über die drei Seitenäste im Gewichtsverhältnis 1 : 1,3 : 1,6 in den Reaktor eingeleitet, besteht aus 2820 Gew.-Teilen Ethylen, 1985 Gew.Teilen Vinylacetat und 45 Gew.Teilen Propionaldehyd. Die Einspeisestellen für das Monomerengemisch sind so gewählt, daß vier Reaktionszonen entstehen, in denen das Reaktionsgemisch jeweils etwa gleiche Verweilzeit hat. Das Polymerisationsgemisch wird über einen Hochdruck- und einen Niederdruckabscheider entspannt und das Polymerisat von den nichtumgesetzten Monomeren abgetrennt. Die Monomere werden in den Reaktor zurückgeführt. Die Einstellung der Reaktionstemperatur erfolgt durch dosierte Initiatorzugabe.

Als Reaktionsprodukt erhält man 1800 Gew.-Teile Copolymerisat, da je 100 Gew.-Teile Ethylen, 33,7 Gew.-Teile Vinylacetat enthält. Die Viskosität des Produktes gemessen bei 140°C beträgt 330 mPa.s.

Beispiel 2

Die Polymerisation wird entsprechend Beispiel 1 durchgeführt, jedoch mit geänderter Zusammensetzung der Gasströme.

| Primärgasstrom: | 3105 Gew.-Teile Ethylen<br>737 Gew.-Teile Vinylacetat<br>8 Gew.-Teile Propionaldehyd |
|---|---|
| Sekundärgasstrom: | 2640 Gew.-Teile Ethylen<br>2165 Gew.-Teile Vinylacetat<br>45 Gew.-Teile Propionaldehyd |

Man erhält 1800 Gew.-Teile Copolymerisat, das je 100 Gew.-Teile Ethylen 40,3 Gew.-Teile Vinylacetat enthält. Die Viskosität des Produktes gemessen bei 140°C beträgt 300 mPa.s.

Beispiel 3

Die Polymerisation wird gemäß Beispiel 1 durchgeführt, jedoch mit geänderter Zusammensetzung der Ströme und mit einer um etwa 30 % geringeren Förderleistung des Kompressors. Außerdem wird der Reaktionsdruck auf 175 mPa erhöht.

| Primärgasstrom: | 2381 Gew.-Teile Ethylen<br>365 Gew.-Teile Vinylacetat<br>4 Gew.-Teile Propionaldehyd |
|---|---|
| Sekundärgasstrom: | 1685 Gew.-Teile Ethylen<br>1740 Gew.-Teile Vinylacetat<br>25 Gew.-Teile Propionaldehyd |

Als Reaktionsprodukt erhält man 1800 Gew.-Teile Copolymerisat, das je 100 Gew.-Teile Ethylen 37,2 Gew.-Teile Vinylacetat enthält. Die Viskosität des Produktes gemessen bei 140°C beträgt 0,5 Pa.s.

Beispiel 4

Die Polymerisation erfolgt gemäß Beispiel 1 mit dem Unterschied, daß Primär- und Sekundärgasstrom die gleiche Zusammensetzung aufweisen, nämlich:
4945 Gew.-Teile Ethylen
2000 Gew.-Teile Vinylacetat
55 Gew.-Teile Propionaldehyd
Man erhält 1800 Gew.Teile Copolymerisat, das je 100 Gew.-Teile Ethylen 40 Gew.-Teile Vinylacetat enthält. Die Viskosität des Produktes bei 140°C beträgt 0,2 Pa.s.
Die breitere Wirksamkeit als Fließpunktverbesserer der nach den Beispielen 1 bis 3 hergestellten Produkte gegenüber Produkten, die nach den bekannten Polymerisationsverfahren mit gleicher Zusammensetzung von Primär- und Sekundärstrom erhalten wurden (Beispiel 4), zeigt die Tabelle 1.

Tabelle 1

Produkt A: Copolymerisat nach Beispiel 1
       B: Copolymerisat nach Beispiel 2
       C: Copolymerisat nach Beispiel 3
       D: Copolymerisat nach Beispiel 4

|  | A | B | C | D |
|---|---|---|---|---|
| Gew.-Teile Vinylacetat je 100 Gew.Teile Ethylen | 33,7 | 40,3 | 37,2 | 40 |
| Viskosität bei 140° (Pas) | 0,33 | 0,3 | 0,56 | 0,2 |

CFPP-Werte

| | | A | B | C | D |
|---|---|---|---|---|---|
| Testöl 1 Zusatz* | 0 ppm | +1 | +1 | +1 | +1 |
| | 100 ppm | -9 | -9 | -8 | -9 |
| Testöl 2 Zusatz* | 0 ppm | +1 | +1 | - | +1 |
| | 100 ppm | -11 | -8 | - | ±0 |
| Testöl 3 Zusatz* | 0 ppm | +3 | +3 | +3 | +3 |
| | 100 ppm | -9 | -8 | -11 | +3 |

* Zahlenwert bezieht sich auf 50 %ige Lösung

Die Eigenschaften der Testöle sind in Tabelle 2 zusammengestellt.

6

Tabelle 2

Kennzeichnung der Testöle

|  | Testöl 1 | Testöl 2 | Testöl 3 |
|---|---|---|---|
| Siedeanalyse (°C) | | | |
| Siedeanfang | 180 | 163 | 166 |
| 5 % | 202 | 191 | 190 |
| 50 % | 297 | 272 | 272 |
| 90 % | 357 | | 362 |
| 95 % | | 381 | 387 |
| Siedeende | 357 | 385 | 393 |
| Cloud-Point (°C) | 7 | 8 | +8 |
| CFPP-Wert (°C) | 1 | 1 | +3 |
| Gehalt an n-Paraffinen (%) | 39,1 | 26,8 | 25,6 |

**Patentansprüche**

1. Verfahren zur Herstellung von Copolymerisaten aus Ethylen und einem Ester des Vinylalkohols mit 4 bis 12 Kohlenstoffatomen, der sich von geradkettigen oder verzweigten, gesättigten, aliphatischen Monocarbonsäuren ableitet oder Estern der Acrylsäure oder der Methacrylsäure, die sich von geradkettigen oder verzweigten gesättigten Alkoholen mit 2 bis 20 Kohlenstoffatomen ableiten als Comonomeren, die je 100 Gew.-Teile Ethylen 25 bis 55 Gew.-Teile des Comonomeren enthalten und eine Viskosität im Bereich von 0,1 Pa . s (gemessen nach DIN 53 019 bei 140°C bis 20 Pa . s (gemessen nach DIN 53 019 bei 180°C) aufweisen durch Polymerisation der Monomeren in einem mit mindestens einem Seitenast ausgerüsteten Rohrreaktor bei 120 bis 300 MPa und 150 bis 300°C in Gegenwart von Radikale bildenden Initiatoren und Polymerisationsreglern, dadurch gekennzeichnet, daß das dem Reaktoreingang zugeführte Monomerengemisch (Primärstrom) 10 bis 35 Gew.-Teile Comonomer je 100 Gew.-Teile Ethylen und das dem Seitenast bzw. den Seitenästen zugeführte Monomerengemisch (Sekundärstrom) 40 bis 150 Gew.-Teile Comonomer je 100 Gew.-Teile Ethylen enthält.

2. Verfahren nach Anspruch 1, dadurch gekennzeichnet, daß der Comonomerenanteil im Primärstrom 15 bis 25 Gew.-Teile je 100 Gew.-Teile Ethylen und im Sekundärstrom 50 bis 110 Gew.-Teile je 100 Gew.-Teile Ethylen beträgt.

**3.** Verfahren nach Anspruch 1 oder 2, dadurch gekennzeichnet, daß die Initiatorgehalte im Primärstrom 50 bis 200 Gew.-ppm und im Sekundärstrom 100 bis 800 Gew.-ppm, jeweils bezogen auf das Monomerengemisch, betragen.

**4.** Verfahren nach einem oder mehreren der Ansprüche 1 bis 3, dadurch gekennzeichnet, daß die Reglerkonzentration im Primär- und Sekundärstrom gleich oder verschieden ist und 0,1 bis 4 Gew.-%, bezogen auf das Monomerengemisch, beträgt.

**5.** Verfahren nach Anspruch 4, dadurch gekennzeichnet, daß die Reglerkonzentration im Primärstrom 0,1 bis 3 Gew.-% und im Sekundärstrom 0,1 bis 3,9 Gew.-%, bezogen auf das Monomerengemisch, beträgt.

**6.** Verfahren nach einem oder mehreren der Ansprüche 1 bis 5, dadurch gekennzeichnet, daß das Volumenverhältnis von Primärstrom zu Sekundärstrom 1 : 0,6 bis 1,5 beträgt.

**7.** Verfahren nach einem oder mehreren der Ansprüche 1 bis 6, dadurch gekennzeichnet, daß der Sekundärstrom in 1 bis 3, vorzugsweise 3 Teilströme aufgeteilt wird.

**8.** Verwendung der nach einem oder mehreren der Ansprüche 1 bis 7 hergestellten Copolymerisate als Fließpunktverbesserer für Mineralöle und Mineralöldestillate.

## Claims

**1.** A process for preparing copolymers from ethylene and an ester of vinyl alcohol having 4 to 12 carbon atoms which is derived from straight-chain or branched, saturated aliphatic monocarboxylic acids or esters of acrylic acid or methacrylic acid which are derived from straight-chain or branched saturated alcohols having 2 to 20 carbon atoms as comonomers containing 25 to 55 parts by weight of the comonomer per 100 parts by weight of ethylene and exhibiting a viscosity in the range of 0.1 Pa x sec. (measured in accordance with DIN 53 019 at 140°C) to 20 Pa x sec. (measured in accordance with DIN 53 019 at 180°C) by the polymerisation of the monomers in a tubular reactor provided with at least one side branch at pressures of 120 to 300 MPa and temperatures of 150 to 300°C in the presence of radical-forming initiators and polymerisation regulators, characterised in that the monomer mixture (primary stream) fed into the reactor inlet contains 10 to 35 parts by weight of comonomer per 100 parts by weight of ethylene and the monomer mixture (secondary stream) fed into the side branch or side branches contains 40 to 150 parts by weight of comonomer per 100 parts by weight of ethylene.

**2.** A process according to claim 1, characterised in that the proportion of comonomer in the primary stream is 15 to 25 parts by weight per 100 parts by weight of ethylene and 50 to 110 parts by weight per 100 parts by weight of ethylene in the secondary stream.

**3.** A process according to claim 1 or 2, characterised in that the initiator content in the primary stream is 50 to 200 weight ppm and in the secondary stream to 100 to 800 weight ppm, in each case related to the monomer mixture.

**4.** A process according to one or more of the claims 1 to 3, characterised in that the regulator concentrations in the primary and secondary streams are equal or different and amount to 0.1 to 4 wt %, related to the monomer mixture.

**5.** A process according to claim 4, characterised in that the regulator concentration in the primary stream is 0.1 to 3 wt % and in the secondary stream 0.1 to 3.9 wt %, related to the monomer mixture.

**6.** A process according to one or more of the claims 1 to 5, characterised in that the volume ratio of the primary stream to the secondary stream is 1 : 0.6 to 1.5.

**7.** A process according to one or more of the claims 1 to 6, characterised in that the secondary stream is divided into 1 to 3, preferably 3, partial streams.

**8.** The use of the copolymers prepared according to one or more of the claims 1 to 7 as pour-point improvers for mineral oils and mineral oil distillates.

**Revendications**

1. Procédé de préparation de copolymères de l'éthylène et d'un ester de l'alcool vinylique contenant 4 à 12 atomes de carbone, dérivant d'acides monocarboxyliques aliphatiques saturés à chaîne droite ou ramifiée, ou d'esters de l'acide acrylique ou de l'acide méthacrylique dérivant d'alcools saturés à chaîne droite ou ramifiée en C2-C20, en tant que comonomères, contenant 25 à 55 parties du comonomère pour 100 parties en poids d'éthylène et ayant une viscosité dans l'intervalle de 0,1 Pa.s (mesure selon norme allemande DIN 53 019 à 140°C) à 20 Pa.s (mesure selon norme allemande DIN 53 019 à 180°C) par polymérisation des monomères dans un réacteur tubulaire équipé d'au moins un branchement latéral à des pressions de 120 à 300 MPa et des températures de 150 à 300°C en présence d'inducteurs radicalaires et de régulateurs de polymérisation, caractérisé en ce que le mélange de monomères envoyé à l'entrée du réacteur (courant primaire) contient de 10 à 35 parties en poids du comonomère pour 100 parties en poids d'éthylène et le mélange des monomères envoyé au branchement latéral ou aux branchements latéraux (courant secondaire) contient de 40 à 150 parties en poids du comonomère pour 100 parties en poids d'éthylène.

2. Procédé selon la revendication 1, caractérisé en ce que la proportion du comonomère dans le courant primaire est de 15 à 25 parties en poids pour 100 parties d'éthylène et la proportion du comonomère dans le courant secondaire est de 50 à 110 parties en poids pour 100 parties d'éthylène.

3. Procédé selon la revendication 1 ou 2, caractérisé en ce que la teneur en inducteur dans le courant primaire est de 50 à 200 ppm en poids et dans le courant secondaire de 100 à 800 ppm en poids, dans les deux cas par rapport au mélange des monomères.

4. Procédé selon une ou plusieurs des revendications 1 à 3, caractérisé en ce que la concentration en régulateur du courant primaire et du courant secondaire est identique ou différente et représente de 0,1 à 4% du poids du mélange des monomères.

5. Procédé selon la revendication 4, caractérisé en ce que la concentration en régulateur dans le courant primaire est de 0,1 à 3% en poids et dans le courant secondaire de 0,1 à 3,9% en poids, par rapport au mélange des monomères.

6. Procédé selon une ou plusieurs des revendications 1 à 5, caractérisé en ce que les proportions relatives en volume courant primaire/courant secondaire sont de 1:0,6 à 1,5.

7. Procédé selon une ou plusieurs des revendications 1 à 6, caractérisé en ce que le courant secondaire est divisé en 1 à 3, de préférence en 3 courants partiels.

8. Utilisation des copolymères préparés selon une ou plusieurs des revendications 1 à 7 en tant qu'améliorants des points de liquéfaction des huiles minérales et distillats d'huiles minérales.